# EUROPÄISCHE PATENTSCHRIFT

(11) **EP 0 534 124 B1**
(45) Veröffentlichungstag und Bekanntmachung des Hinweises auf die Patenterteilung: **17.04.1996**
(21) Anmeldenummer: 92114009.1
(22) Anmeldetag: 17.08.1992
(51) Int. Cl.: F16F 13/00

(54) **Elastisches Motorlager**
Elastic engine support
Support moteur élastique

(30) Priorität: 24.09.1991 DE 4131771
(43) Veröffentlichungstag der Anmeldung: 31.03.1993
(73) Patentinhaber: METZELER GIMETALL AG, D-80992 München (DE)
(72) Erfinder: Hofmann, Manfred, Dipl.-Ing., W-6257 Hünfelden 1 (DE); Steffens, Rainer, Dipl.-Ing., W-5416 Hillscheid (DE); Sauer, Wolfgang, Dr., W-5419 Puderbach (DE)
(74) Vertreter: Preissner, Nicolaus, Dipl.-Ing.

(56) Entgegenhaltungen:
- EP-A- 0 053 401
- EP-A- 0 091 246
- DE-C- 4 002 357
- GB-A- 2 086 530

## Beschreibung

Die Erfindung bezieht sich auf ein elastisches Motorlager mit einem hohlzylindrischen, elastomeren Federkörper, der stirnseitig zwischen zwei Lagerplatten eingespannt ist, einem inneren Hohlraum, der durch den Federkörper und die Platten begrenzt ist, einem in den inneren Hohlraum angeordneten Bolzen, der von der oberen Lagerplatte abragt, einer am Bolzen mittig festgelegten elastischen Wandung, die in dem Hohlraum querverläuft und im Hohlraum zwei mit Flüssigkeit gefüllte Kammern voneinander trennt, wobei in der elastischen Wandung mindestens ein Überströmkanal vorgesehen ist, der die Kammern miteinander verbindet und wobei die elastische Wandung einen mittleren verdickten, am Bolzen festgelegten Bereich und im radial äußeren Bereich eine flexible, dünnere Wand aufweist, die an ihrem Außenumfang festgelegt ist.

Ein derartiges Motorlager ist aus der EP 0 091 246 A1 bekannt. Das bekannte Motorlager weist einen elastischen Federkörper auf, der zwischen zwei Lagerplatten eingespannt ist. An einen den Federkörper durchdringenden Bolzen ist endseitig eine elastische Wandung festgelegt, die einen inneren Hohlraum in zwei Kammern unterteilt. Die Kammern sind mit einem Fluid gefüllt und über einen in der elastischen Wandung vorgesehenen Überströmkanal miteinander verbunden. Der äußere Bereich der elastischen Wandung ist gegenüber dem mittleren am Bolzen festgelegten Bereich dünner ausgebildet. Zumindest teilweise ist die dünnere Wand schrägverlaufend zu dem mittleren verdickten Bereich ausgeführt. Am Außenumfang ist die flexible dünnere Wand an der unteren Lagerplatte festgelegt.

Aus der deutschen Patentschrift 40 02 357 ist ein elastisches Motorlager mit einem hohlzylindirschen Federkörper aus einem Elastomer bekannt, bei dem in mehreren ebenen Scharen innerhalb einer Ebene parallele und zumindest einseitig offene Kanäle wechselnden Querschnitts vorgesehen sind. Ein derartiges Lager, das auch als Softlager bezeichnet wird, weist eine sehr gute Dämmung im akustischen Bereich auf und hat bei entsprechender Gestaltung der eingeformten Kanäle mit kontinuierlichem Übergang von einem Querschnitt auf den nächsten einen sanften Übergang zu höheren Federsteifigkeiten. Wegen der relativen Weichheit derartiger Federkörper weisen diese zwar eine optimale Dämmwirkung für Körperschall auf, bewirken jedoch praktisch keinerlei Dämpfung für niederfrequente Schwingungen. Eine derartige Dämpfung wird jedoch für Hochleistungs- und Dieselfahrzeuge benötigt, und zwar zur Dämpfung des Motorstuckerns bei 7 Hz, sowie von Lastwechseln bei etwa 2 bis 3 Hz.

Der vorliegenden Erfindung liegt die Aufgabe zugrunde ein Motorlager vorzuschlagen, das eine ausreichende Dämpfung in dem angeführten Frequenzbereich aufweist.

Zur Lösung dieser Aufgabe ist bei einem elastischen Motorlager der eingangs genannten Art erfindungsgemäß vorgesehen, daß der Federkörper in mehreren Ebenenscharen jeweils innerhalb einer Ebene parallele und zumindest einseitig offene Kanäle wechselnden Querschnitts aufweist, daß die flexible dünnere Wand auswölbbar ausgebildet ist und am Außenumfang einen verdickten Randbereich aufweist, der zwischen der unteren im mittleren Bereich tassenförmig ausgewölbten Lagerplatte und einer hierauf aufliegenden ringförmigen Platte eingespannt ist, die eine tassenförmige Aufwölbung aufweist, die im Hohlraum angeordnet ist und den mittleren Bereich der elastischen Wandung mit Abstand als Zuganschlag übergreift.

Durch eine solche Gestaltung wird ein hydraulisch dämpfendes Einkammer-Motorlager mit einem hochdämmenden Federkörper geschaffen, so daß das Lager sowohl eine optimale Dämmung für Körperschall als auch eine hohe Dämpfung für niederfrequente Schwingungen großer Amplitude aufweist. Die Abdichtung zwischen den beiden mit Flüssigkeit gefüllten Kammern wird dadurch erreicht, daß der verdickte Randbereich der elastischen Wandung zwischen der unteren Lagerplatte und der ringförmigen Platte eingespannt ist. Die ringförmige Platte, die mit einer den mittleren Bereich der elastischen Wandung mit Abstand übergreifenden Aufwölbung versehen ist, dient gleichzeitig als Zuganschlag. Somit zeichnet sich das erfindungsgemäße Motorlager durch ein geringes Bauvolumen und einfache Herstellbarkeit aus.

Vorteilhafte Ausgestaltungen der Erfindung ergeben sich aus den Unteransprüchen.

Zur zusätzlichen Hochfrequenzentkopplung kann der zentrale Bolzen etwa auf halber Höhe mit einer ringförmigen, radial abragenden Platte versehen sein, die am Außenumfang einen Spalt vorgegebener Breite zum Innenmantel des holzylindrischen Federkörpers frei läßt.

Um gleichzeitig das Lager mit einem Radilanschlag gegen zu große radiale Auslenkungen auszurüsten, ist es zweckmäßig, wenn die obere Lagerplatte als auch die ringförmig abragende Platte jeweils am Außenumfang mit einem zur unteren Lagerplatte gerichteten hohlzylindrischen Ansatz versehen sind.

Zur weiteren Optimierung des hydraulisch dämpfenden Motorlager kann zwischen der elastischen Wandung und der unteren, tassenförmig ausgewölbten Lagerplatte eine weitere elastische Gummimembran eingespannt und die untere Lagerplatte mit Entlüftungsbohrungen versehen sein.

An Hand einer schematischen Zeichnung sind Aufbau und Wirkungsweise von Ausführungsbeispiele nach der Erfindung näher erläutert. Dabei zeigen
- Fig. 1: einen Längsschnitt durch ein solches Lager mit integriertem hydraulischem Dämpferteil und
- Fig. 2: eine weitere Ausgestaltung dieses Lagers mit Radialazschlägen und zusätzlicher Ausgleichskammer.

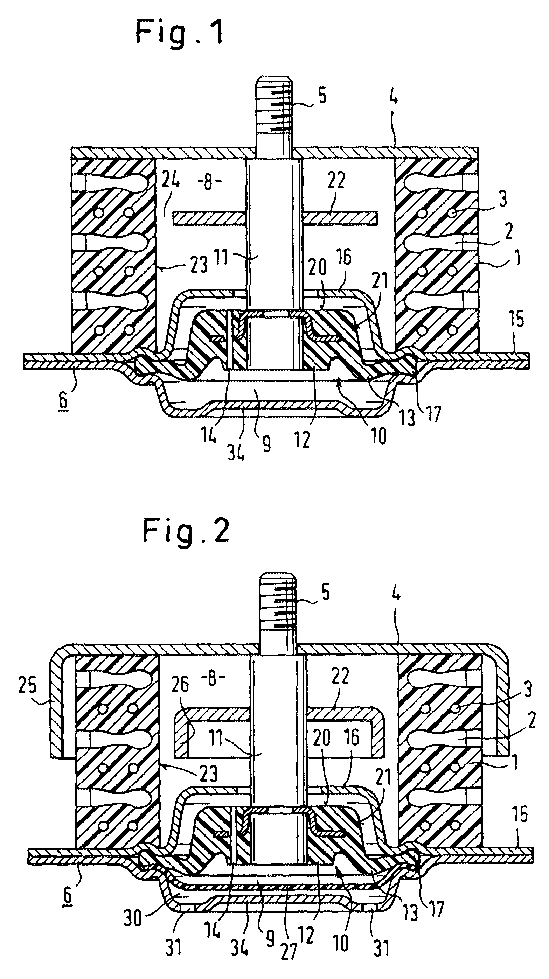

Wie man aus Figur 1 ersieht, weist das Motorlager einen hohlzylindrischen Federkörper 1 aus einem Elastomer auf, der von radialen Kanälen 2 oder parallel zueinander verlaufenden Kanälen 3 mit von Ebene zu Ebene um jeweils 90° versetzter Ausrichtung durchsetzt ist. Diese Kanäle 2 und 3 weisen über ihrer Länge wechselnden Querschnitt mit sanften Übergang von einem Querschnitt zum nächsten auf, so daß beim Zusammenpressen in axialer Richtung nacheinander zunehmend gegenüberliegende Wandungen eines Kanals miteinander in Berührung kommen und damit ein sanfter Anstieg der Federkennlinie gegeben ist.

Dieser Federkörper 1 ist zwischen einer oberen Lagerplatte 4 mit einem zentralen Gewindebolzen 5 zur Festlegung am Motor und einer unteren Lagerplatte 6 zur Festlegung an der Karosserie des Fahrzeuges eingespannt.

Ein solches Lager weist eine hohe Dämmmung für Körperschall, d.h. akustische Schwingungen auf, besitzt jedoch keinerlei Dämpfung niederfrequenter Schwingungen großer Amplitude.

Um nunmehr ein solches Lager auch für eine derartige Dämpfung zu ertüchtigen, ist ein innerer zylindrischer Hohlraum innerhalb des Federkörpers 1 zwischen oberer Lagerplatte 4 und unterer Lagerplatte 6 durch eine querverlaufende, elastische Wandung 10 in eine obere Kammer 8 und eine untere Kammer 9 unterteilt, wobei die Wandung 10 zentral an einem, von der oberen Lagerplatte 4 nach unten ragenden Bolzen 11 festgelegt ist. Diese Wandung 10 weist zweckmäßigerweise einen verdickten und praktisch zylindrisch gestalteten, mittleren Bereich 12 und einen radial daran anschließenden, leichter verformbaren, äußeren Wandungsbereich 13 auf, dessen Funkion später noch beschrieben sind. Innerhalb des verdickten, mittleren Bereiches 12 sind koaxiale Überströmkanäle 14 vorgesehen, von denen zweckmäßigerweise drei Kanäle am Umfang verteilt angeordnet sind, und damit eine Flüssigkeitsverbindung zwischen der oberen Kammer 8 und der unteren Kammer 9 herstellen. Um dabei eine ausreichend dimensionierte Überströmkammer 9 zu erhalten, ist es zweckmäßig, wenn die untere Lagerplatte 6 im mittleren Bereich eine tassenförmige Auswölbung 34 aufweist.

Zur besseren Halterung der Wandung 10 kann dabei auf der unteren Lagerplatte 6 noch eine weitere ringförmige Platte 15 aufgesetzt sein, die im innen liegenden Bereich ebenfalls eine tassenförmige Aufwölbung 16 aufweist, die praktisch parallel zur oberseitigen Kontur des mittleren verdickten Bereiches 12 der Wandung 10 verläuft und diesen übergreift. Zwischen diesen beiden zweckmäßigerweise miteinander verschweißten Platten 6 und 15 ist dann die elastische Wandung 10 am Außenumfang mit ihrem verdickten Randbereich 17 eingespannt.

Durch die entsprechende Gestaltung des innen liegenden Randes der Ringplatte 15 wirkt diese einmal als Zuganschlag gegenüber der Oberseite 20 der Wandung 10 und gleichzeitig im vertikalen Bereich als Radialanschlag gegenüber dem Außenumfang 21 des Wandungsteils 12.

Wenn nunmehr niederfrequente Schwingungen großer Amplitude auf die obere Lagerplatte 4 einwirken, wird der Bolzen 11 und damit die Wandung 10 nach unten gedrückt, so daß Flüssigkeit von der Kammer 8 über die Überströmkanäle 14 in die Kammer 9 strömt und durch Reibungsverluste während dieses Übertrittes eine entsprechende Dämpfung erfolgt. Bei Zugbelastungen auf die obere Lagerplatte 4 erfolgt dann eine Überströmung von Kammer 9 in Kammer 8 in umgekehrter Richtung.

Zusätzlich ist der Bolzen 11 etwa auf mittlerer Höhe mit einer ringförmigen radial abragenden Platte 22 versehen, die zum Innenmantel 23 des zylindrischen Federblockes 1 einen Spalt 24 vorgegebener und konstanter Breite freiläßt. Bei Einleitung hochfrequenter Schwingungen ergibt sich damit ein hochfrequenter Trägheitseffekt, der die dynamische Steifigkeit des Lagers absenkt. Damit werden hochfrequente Schwingungen sicher entkoppelt, so daß auch über den Flüssigkeitsweg eine Übertragung akustischer Schwingungen verhindert wird.

Bei dem in Figur 2 dargestellten Ausführungsbeispiel, das vom gleichen Grundprinzip des Lagers wie bei Figur 1 ausgeht, sind zusätzlich am Außenumfang der oberen Lagerplatte 4 sowie am Außenumfang der Ringplatte 22 sich in axialer Richtung auf die untere Lagerplatte 6 zu erstreckende zylindrische Ansätze 25 und 26 vorgesehen, die als zusätzlicher Radialanschlag für den oberen hohlzylindrischen Federkörper 1 dienen.

Zusätzlich ist zwischen der Wandung 10 und dem unteren ausgewölbten Bereich 34 der Lagerplatte 6 eine weitere flexible Gummimembran 27 eingespannt, die jetzt eine äußere elastische Berandung der unteren Kammer 9 bildet. Der verbleibende Hohlraum 30 zwischen Membran 27 und Auswölbung 34 stellt jetzt nur noch eine Luftkammer dar, die über entsprechende Bohrungen 31 in der Auswölbung 34 bei Auswölbung der Gummimembran 27 nach unten auf atmosphärem Druck gehalten werden kann.

Insgesamt ergibt sich somit ein Motorlager, das neben einer optimalen Dämmung von Körperschall auch eine gute Dämpfung niederfrequenter Schwingungen aufweist, wie sie von einem herkömmlichen hyrdaulisch, dämpfenden Motorlager cder einem Softlager allein nicht bewerkstelligt werden könnte.

## Patentansprüche

1. Elastisches Motorlager mit einem hohlzylindrischen, elastomeren Federkörper (1), der stirnseitig zwischen zwei Lagerplatten (4, 6) eingespannt ist, einem inneren Hohlraum, der durch den Federkörper (1) und die Platten. (4, 6) begrenzt ist, einen in dem inneren Hohlraum angeordneten Bolzen (11), der von der oberen Lagerplatte (4) abragt, eine am Bolzen (11) mittig festgelegten elastischen Wandung (10), die in dem Hohlraum querverläuft und im Hohlraum zwei mit Flüssigkeit gefüllte Kammern (8, 9) voneinander trennt, wobei in der elastischen Wandung mindestens ein Überströmkanal (14) vorgesehen ist, der die Kammern (8, 9) miteinander verbindet und wobei die elastische Wandung (10) einen mittleren, verdickten, am Bolzen (11) festgelegten Bereich (12) und im radial äußeren Bereich eine flexible, dünnere Wand (13) aufweist, die an ihrem Außenumfang festgelegt ist, dadurch gekennzeichnet, daß der Federkörper (1) in mehreren Ebenenscharen jeweils innerhalb einer Ebene parallele und zumindest einseitig offene Kanäle (2) wechselnden Querschnitts aufweist, daß die flexible, dünnere Wand (13) auswölbbar ausgebildet ist und am Außenumfang einen verdickten Randbereich (17) aufweist, der zwischen der unteren im mittleren Bereich tassenförmig ausgewölbten Lagerplatte (6) und einer hierauf aufliegenden ringförmigen Platte (15) eingespannt ist, die eine tassenförmige Aufwölbung (16) aufweist, die im Hohlraum angeordnet ist und den mittleren Bereich (12) der elastischen Wandung (10) mit Abstand als Zuganschlag übergreift.

2. Elastisches Motorlager nach Anspruch 1, dadurch gekennzeichnet, daß zur Entkopplung hochfrequenter Schwingungen der zentrale Bolzen (11) etwa auf halber Höhe mit einer ringförmigen, radial abragenden Platte (22) versehen ist, die am Außenumfang einen Spalt (24) vorgegebener Breite zum Innenmantel (23) des hohlzylindrischen Federkörpers (1) freiläßt.

3. Elastisches Motorlager nach einem der vorhergehenden Ansprüche, dadurch gekennzeichnet, daß sowohl die obere Lagerplatte (4) als auch die ringförmig abragende Platte (22) am Außenumfang mit einem zur unteren Lagerplatte (6) gerichteten hohlzylindrischen Ansatz (25, 26) als Radialanschlag versehen ist.

4. Elastisches Motorlager nach Anspruch 1, dadurch gekennzeichnet, daß zwischen elastischer Wandung (10) und unterer, tassenförmig ausgewölbter Lagerplatte (6) eine weitere elastische Gummimembran (27) eingespannt ist und die untere Lagerplatte (6) mit Entlüftungsbohrungen (31) versehen ist.

## Claims

1. Resilient engine mounting with a hollow cylindrical elastomeric spring member (1) which is fixed at the ends between two mounting plates (4, 6), an internal cavity which is limited by the spring member (1) and the plates (4, 6), a bolt (11) which is arranged in the internal cavity and projects from the upper mounting plate (4), a resilient wall (10) which is fixed centrally on the bolt (11), extends transversely in the cavity and separates two chambers (8, 9) filled with liquid in the cavity, wherein at least one overflow channel (14) which connects the chambers (8, 9) to one another is provided in the resilient wall and wherein the resilient wall (10) has a central thickened region (12) fixed on the bolt (11) and, in the radially outer region, a flexible thinner wall (13) which is fixed at its outer periphery, characterized in that the spring member (1) has, in several groups of planes, channels (2) of varying cross section which are each parallel within a plane and open at least on one side, in that the flexible thinner wall (13) is designed to bulge and, at the outer periphery, has a thickened edge region (17) which is fixed between the lower mounting plate (6) bulging in the manner of a cup in the central region and an annular plate (15) which rests thereon and has a cup-shaped arch (16) which is arranged in the cavity and passes over the central region (12) of the resilient wall (10) with spacing as a pull stop.

2. Resilient engine mounting according to claim 1, characterized in that, for isolating high-frequency vibrations, the central bolt (11) is provided, about halfway up, with an annular radially projecting plate (22) which leaves, at the outer periphery, a gap (24) of predetermined width from the inner casing (23) of the hollow cylindrical spring member (1).

3. Resilient engine mounting according to one of the preceding claims, characterized in that the upper mounting plate (4) as well as the annularly projecting plate (22) are provided at the outer periphery with a hollow cylindrical projection (25, 26) directed toward the lower mounting plate (6) as a radial stop.

4. Resilient engine mounting according to claim 1, characterized in that a further resilient rubber membrane (27) is fixed between the resilient wall (10) and the lower mounting plate (6) bulging in the manner of a cup and the lower mounting plate (6) is provided with vent holes (31).

## Revendications

1. Support élastique pour moteur, comprenant un corps élastique (1) cylindrique creux en matériau élastomère, qui est serré du côté frontal entre deux plaques de montage (4, 6), une cavité intérieure délimitée par le corps élastique (1) et les plaques (4, 6), une tige (11) agencée dans la cavité intérieure et dépassant depuis la plaque de montage supérieure (4), une paroi (10) élastique fixée au centre sur la tige (11) et s'étendant transversalement dans la cavité en séparant l'une de l'autre dans la cavité deux chambres (8, 9) remplies d'un liquide, et dans la paroi élastique il est prévu au moins un canal d'écoulement (14) qui relie les chambres (8, 9) l'une à l'autre, la paroi élastique (10) comportant une région médiane épaissie (12), fixée sur la tige (11), et dans la région extérieure une cloison souple plus mince (13) qui est fixée à sa périphérie extérieure, caractérisé en ce que le corps élastique (1) présente dans plusieurs familles de plans, respectivement à l'intérieur d'un plan, des canaux parallèles (2) ouverts sur au moins un côté et à section variable, en ce que la cloison souple plus mince (13) est réalisée de manière à pouvoir être bombée, et présente à la périphérie extérieure une zone de bordure épaissie (17) qui est serrée entre la plaque de montage inférieure (6) bombée en forme de tasse dans la région centrale et une plaque annulaire (15) reposant sur celle-ci et présentant un bombement (16) en forme de tasse, qui est agencée dans la cavité et engage la région médiane (12) de la paroi élastique (10) par le dessus à distance, en tant que butée de traction.

2. Support élastique pour moteur selon la revendication 1, caractérisé en ce que pour découpler les oscillations à haute fréquence, la tige centrale est pourvue approximativement à mi-hauteur d'une plaque annulaire (22) dépassant radialement, qui libère à la périphérie extérieure une fente (24) de largeur prédéterminée par rapport à l'enveloppe intérieure (23) du corps élastique cylindrique creux (1).

3. Support élastique pour moteur selon l'une des revendications précédentes, caractérisé en ce que la plaque de montage supérieure (4) ainsi que la plaque annulaire en dépassement (22) sont pourvues à la périphérie extérieure, en tant que butée radiale, d'un talon cylindrique creux (25, 26) dirigé vers la plaque de montage inférieure (6).

4. Support élastique pour moteur selon la revendication 1, caractérisé en ce qu'une autre membrane élastique en caoutchouc (27) est serrée entre la paroi élastique (10) et la plaque de montage inférieure (6) bombée en forme de tasse, et la plaque de montage inférieure (6) est pourvue de perçages de mise à l'air (31).
